Europäisches Patentamt

European Patent Office

Office européen des brevets

(11) Publication number: **0 481 131 A1**

## EUROPEAN PATENT APPLICATION

(21) Application number: **90202790.3**

(22) Date of filing: **19.10.90**

(51) Int. Cl.5: **G03B 27/16**

(43) Date of publication of application:
**22.04.92 Bulletin 92/17**

(84) Designated Contracting States:
**AT BE CH DE DK ES FR GB GR IT LI LU NL SE**

(71) Applicant: **AGFA-GEVAERT naamloze vennootschap**
**Septestraat 27**
**B-2510 Mortsel(BE)**

(72) Inventor: **Burtin, Jean**
**Vosstraat 11**
**B-2400 Mol(BE)**

(54) Contact exposure apparatus.

(57) A contact exposure device comprising a housing with a clear glass plate (12) and an elongate moveable lamp carriage (17) covering the exposure width of the glass plate but only a portion of the exposure length thereof, the lamp carriage being moveable along the length of the glass plate and having several tubular low-pressure mercury vapour fluorescent lamps (21, 22) mounted side by side and parallel to the plane of the glass plate and a honeycomb-like structure (28) between the lamps and the glass plate, the axis of the cells of the structure being normal to the plane of the glass plate, and driving means for driving the carriage at a uniform speed along the length of the glass plate.

Fig.1

EP 0 481 131 A1

## BACKGROUND OF THE INVENTION.

Field of the invention.

The present invention relates to a contact exposure apparatus for contact exposure of a radiation-sensitive film to a transparent original. The invention relates in particular to an exposure apparatus for daylight processing for contact printing and dry retouching.

Description of the prior art.

Known photographic contact exposure apparatus comprise means for holding a radiation-sensitive film in tight contact with a transparent image-bearing sheet, hereinafter called an original located on a glass plate, a lamp housing with an UV-emitting metal halide discharge lamp for carrying out the exposure of the radiation-sensitive film to the original, a shutter for closing the lamp housing, forced-air cooling means, an adjustable electric power supply for the lamp and control means for the power supply and the shutter so that the shutter is open and the lamp operated at full power during the exposure of the film and the shutter is closed and the lamp kept energized at reduced power during standby of the apparatus, i.e. between successive exposures.

These apparatus are expensive because of the high costprice and the limited lifetime of the lamps and the controllable power supply. Furthermore, they are voluminous because of the large distance between the lamp, functioning almost as a pointlike radiator and the glass plate, supporting the film.

Other known exposure apparatus comprise a plurality of tubular low-pressure mercury vapour fluorescent lamps, located close to the glass plate. A uniform illumination of the glass plate is obtained by the use of a diffusing screen between the lamps and the glass plate or by opal glass for the exposure plate. These apparatus are compact, but are not suited for carrying out the exposure of photographic film, being exposed to an original in the form of several superimposed sheets, as is the case in contact printing and dry retouching. For instance, the original may be a sandwich of a screen negative and positives, which is exposed to a direct-positive film to produce a colour-corrected reproduction. An example of this technique wherein contact printing and dry retouching are combined is PRINTON DESC (Trade name of AGFA-GEVAERT N.V., Mortsel, Belgium), an acronym for "PRINTON Dry Etching System by Computer or in other words a computer-controlled working station for dry etching. The present specification is directed in particular to this technique, although it is not at all limited thereto.

The exposure of a radiation-sensitive film to a sandwich of two or more superimposed sheets together forming an "original" requires the use of directed or so-called hard radiation in order to obtain in the film a sharp reproduction of the distinct images located in different planes. The term "directed radiation" means radiation that impinges on the glass plate supporting the sandwich of original and film at a normal or almost normal angle, e.g. with a deviation not larger than approximately 20 degrees.

In contrast therewith stands "diffuse" or so-called soft radiation as produced by fluorescent or incandescent opaline lamps, which comprises radiation components that strongly deviate from the normal to the glass plate.

## SUMMARY OF THE INVENTION.

Objects of the invention.

It is the object of the present invention to provide a compact contact exposure apparatus that produces directed radiation and is economical to operate.

Statement of invention.

A contact exposure apparatus comprising a housing with a clear glass plate in one wall and means for holding a radiation-sensitive film and a transparent original in tight contact with each other on the outside surface of the glass plate and, inside the housing and facing the glass plate, an elongate displaceable lamp carriage covering the exposure width of the glass plate but only a part of the exposure length, the lamp carriage being movable along the length of the glass plate and having tubular low-pressure mercury vapour fluoresent lamps mounted side by side in a plane parallel to that of the glass plate and at a small distance from it and a honeycomb-like structure between the lamps and the glass plate, the axis of the cells of the structure being normal to the plane of the glass plate and at least the upper part of the walls of the cells absorbing the radiation of the lamps, and driving means for driving the carriage at a uniform speed along the length of the glass plate.

The effect of the inventive exposure apparatus results from the absorption of strongly deviating radiation by the walls of the cells of the honeycomb structure whereby only directed radiation impinges on the film. This causes a non-neglectable loss of radiation that otherwise would reach the film, but it has been shown that the yield of the apparatus need not be less than that of known apparatus operating with a metal halide discharge lamp, since the lamps of the inventive apparatus may be extinguished during standby of the apparatus, i.e. during preparations for the next exposure, and that the distance between the lamps and the glass plate is small.

The metal halide discharge lamps of known apparatus, on the contrary, are kept energized at reduced power in standby. Considering that the effective exposure periods of the apparatus amount only to approximately 5 to 10 % of the total amount of working hours of the apparatus, it will be understood that the energy consumption of those known apparatus is high.

The term "width" in the present specification means the dimension of the glass plate that runs parallel with the length of the lamp carriage, whereas the term "length" relates to the dimension that is normal thereto.

The term "honeycomb-like" structure relates to a cellular structural material with a great plurality of hexagonal or otherwise e.g. square shaped passages, the longitudinal axis of which run parallel with each other and are normal to the plane of the structure.

While the honeycomb-like structure may cover the complete exposure area of the glass plate and remain stationary in the apparatus, it is far more interesting to use a structure of a size that nearly corresponds with the exposure opening of the light source and is fitted to the light source to integrally move with as it is moved along the length of the glass plate.

According to an alternative embodiment, the honeycomb structure is fitted to the lamp carriage in a removable way, so that the apparatus may be used without this honeycomb structure when an exposure with diffuse radiation is required. An example of such exposure is, when it must produce a certain broadening of lines or traces, e.g. for conductor paths in printed circuits. Another example is the reducing of the effect of the dust particles and scratches on the glass plate and/or the original.

The walls of the cells of the structure may be radiation absorbant over their full length, thereby producing very directed radiation. However, these walls may also be diffusely reflective at their end facing the lamps, so as to obtain a larger yield of the light source.

BRIEF DESCRIPTION OF THE DRAWINGS.

Detailed description of the invention.

The invention will be described hereinafter by way of example with reference to the accompanying drawings, wherein :

Fig. 1 is a diagrammatic longitudinal sectional view of one embodiment of an apparatus according to the invention,

Fig. 2 is a diagrammatic transverse sectional view of the apparatus according to line 2-2 of Fig. 1, and

Fig. 3 is an enlarged transverse section of the lamp carriage.

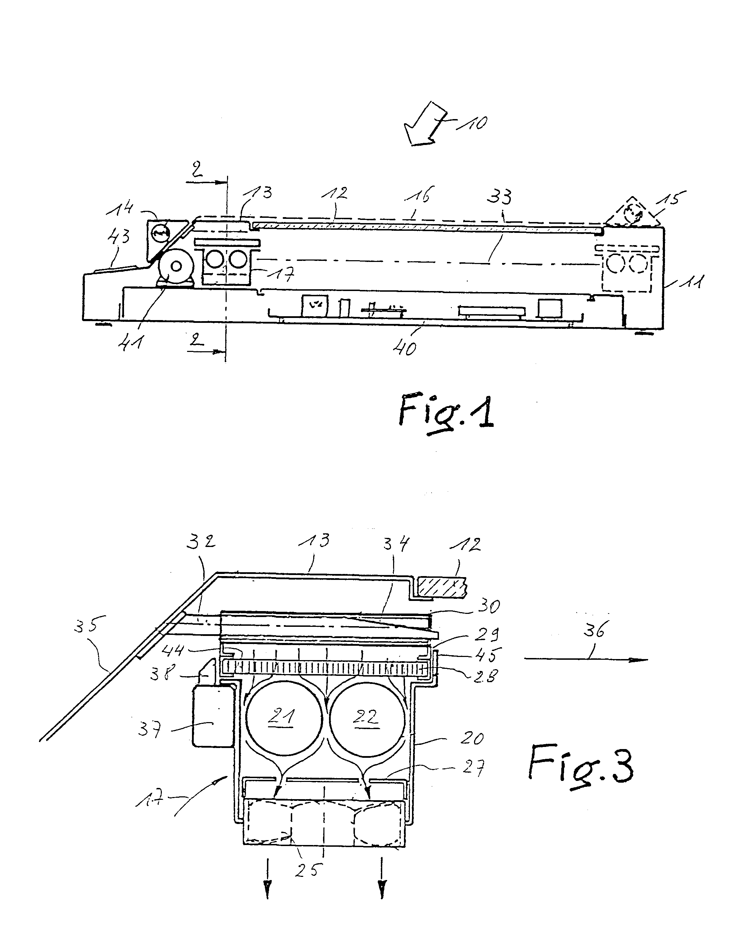

The apparatus illustrated by way of embodiment in Fig. 1 is a so-called bottom-light exposure apparatus.

The apparatus, generally designated by the numeral 10, is mounted within a housing 11 having a clear glass exposure plate 12 in its top wall 13.

An original and a radiation-sensitive film (not illustrated) may be placed on the glass plate and held in tight contact with each other and with the glass plate by means of a blanket that is kept in rolled form in a blanket carriage 14, that in the present embodiment has a generally triangular cross-section. The rest position of the carriage is shown in solid lines, whereas the operative end position is illustrated in broken lines 15, the unrolled blanket being illustrated as 16. A bottom-light exposure apparatus comprising a blanket unrolling arrangement as described is commercially available under the reference CDL 2002 R, manufactured by AGFA-GEVAERT N.V., Mortsel, Belgium.

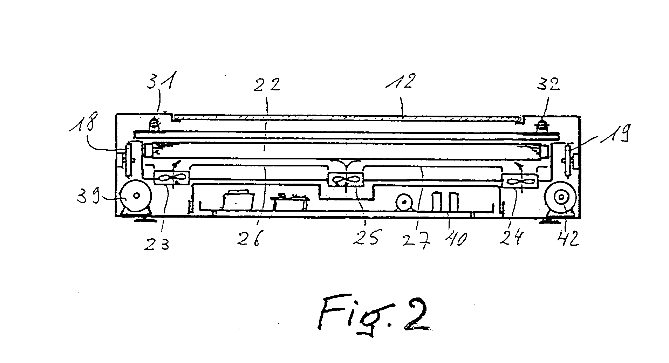

The following components are mounted within the housing. A lamp carriage 17 that can be moved along a path 33 from one end position shown in solid lines to another end position shown in broken lines by suitable guiding means known in the art, such as rods and co-operating guide sleeves. The driving of the carriage may occur by endless chains running over sprocket wheels, two of them being illustrated as 18 and 19 in Fig. 2.

3

The lamp carriage is shown in detail in Fig. 3 and consists basically of a rectangular, elongate metal casing 20, in which two tubular fluorescent lamps 21 and 22 are mounted side by side. Fans 23 and 24 (see Fig. 2) are mounted at the ends of the lamps and force air into the carriage. A third fan 25 is located at the centre of the carriage and draws air from the carriage. Guide plates 26 and 27 at the bottom of the lamps determine a path for the cooling air which is close to the lamps.

A honeycomb plate 28 is fitted in a metal frame 29 which has a supporting sleeve 30 near each lateral end. The sleeves can axially slide over short supporting rods 31 and 32 having a bevelled free end, as is shown by the broken line 34 in fig. 3. The supporting rods are fitted to the inside of the inclined front wall 35 of the apparatus. The lamp carriage is provided at its rearside (considered according to the direction 36 of exposure by the carriage) with a solenoid 37 having a pawl 38 taking a position as illustrated when in rest, but is downwardly withdrawn when the solenoid is energized.

The apparatus further comprises :

A motor 39 for driving the lamp carriage at a uniform speed to the end position (illustrated in broken lines in Fig. 1) and for returning the carriage, occasionally at an increased speed, to its start position.

A motor 41 for driving the carriage with the blanket.

A vacuum pump 42 for establishing a reduced pressure between the glass plate and the blanket.

A printed-circuit board 40 with the power supply for the motors 39 and 41 and with the control logic.

The operation of the apparatus is as follows.

The operator places a sandwich of an original and a daylight-type film on the glass plate of the apparatus and actuates a start button on the display panel 43 of the apparatus to start the exposure cycle.

The blanket holder 14 is started and travels over the apparatus, thereby unrolling the blanket over the films lying on the glass plate. Then the vacuum pump is started and withdraws air whereby atmospheric pressure tightly urges the films in contact with each other.

In the meantime the lamps 21, 22 have been ignited, so that the exposure can start. Motor 39 drives the lamp carriage in the direction of the arrow 36. Solenoid 37 is not energized so that pawl 38 has a position as illustrated. The consequence is that after being displaced a few millimeters, the pawl abuts against the frame 29 that holds the honeycomb plate 28, so that the plate is taken with the carriage 17. The supporting sleeves 30 slide a few centimeters over the rods 31 and 32 and then follow a downwardly inclined path determined by the slanting faces 34 until the frame of the honeycomb comes to rest in the top opening of the lamp carriage 17 and thus becomes further supported by this carriage. The lamp carriage moves along the length of the glass plate 12 and progressively exposes in this way the radiation-sensitive film disposed thereon through the original.

Although the radiation emitted by the lamps is diffuse, the walls 44 of the channels of the honeycomb plate 28 absorb any radiation that strikes their surface, so that the radiation leaving the plate has a directed configuration whereby a sharp reproduction of the image of the original on the radiation-sensitive film is obtained.

When the lamp carriage has reached the position illustrated in broken lines in Fig. 1, the exposure is finished. The lamps can be extinguished and the vacuum released, so that the exposed film can be taken away for developing the latent image.

In the meantime, the lamp carriage may return to its initial position. Just before the end of its course, the sleeves 30 make contact with the rods 31 and 32, so that the honeycomb frame is moved slightly upwardly, whereby it is separated from the lamp carriage, although contact with the upstanding rim 45 is maintained whereby the honeycomb frame becomes further advanced by the lamp carriage up to the rest position of the carriage.

If an exposure with diffuse radiation has to be made, solenoid 37 is energized and its pawl 38 is withdrawn, so that the honeycomb frame is not taken with the lamp carriage and the exposure of the radiation-sensitive film occurs by the radiation, omni-directionally emitted by the fluorescent lamps.

The following data characterize the apparatus.

```
Dimensions                                  80 x 95 x 30 cm

Working size of the glass plate             56 x 69 cm

Light sources :

      two low-pressure mercury vapour

      fluorescent tubes, type TL 90 D 38/10 R

      90 Watts, manufactured by Philips
```

4

```
Maximum power on the
glass plate (honeycomb in place)              1000 uW/cm2
Speed of the lamp carriage, between           5 and 15 cm/s
Honeycomb structure :
     thickness                                7.0 mm
     approximate number of hexagonal
     cells per square dm :                    960
     wall thickness of cells                  0.3 mm
     material : paper strips assembled
     by glueing into the appropriate shape.
```

The invention is not limited to the embodiment described hereinbefore.

The honeycomb structure must not necessarily travel with the lamp carriage, but may also be supported separate therefrom. For instance, the honeycomb structure may have a size that corresponds approximately with that of glass plate. In such case it is advisable to provide means for causing the honceycomb structure to carry out small wobbling displacements in its own plane, thereby avoiding exposure of the cell walls on the film.

The lamp carriage may have a mask over its opening that provides a compensation for radiation output variations of the lamps according to their length.

The ventilation of the lamp carriage may be controlled to maintain the lamps at a temperature in the range of 40° to 45°C, which has been shown to offer a maximum radiation output for this type of lamps.

## Claims

1.  A contact exposure device comprising a housing (11) with a clear glass plate (12) in one wall and means (16) for holding a radiation-sensitive film and a transparent original in tight contact with each other on the outside surface of the glass plate and, inside the housing and facing the glass plate an elongate moveable lamp carriage (17) covering the exposure width of the glass plate but only a portion of the exposure length thereof, the lamp carriage being moveable along the length of the glass plate and having tubular low-pressure mercury-vapour fluorescent lamps (21, 22) mounted side by side in a plane parallel to the plane of the glass plate and at a small distance from the glass plate and a honeycomb-like structure (28) between the lamps and the glass plate the axis of the cells of the structure being normal to the plane of the glass plate, and at least the upper part of the walls of the cells absorbing the radiation of the lamps, and driving means (39) for driving the carriage at a uniform speed along the length of the glass plate.

2.  A contact exposure device according to claim 1, wherein the honeycomb-like structure (28) has a size corresponding with the exposure opening of the lamp carriage (17) and is arranged for being supported by the carriage, thereby to move integrally with the carriage as this is moved along the length of the glass plate.

3.  A contact exposure device according to claim 2, wherein the lamp carriage (17) is in the rest position located outside of the exposure area of the glass plate and the fitting of the honeycomb-like structure (28) to the lamp carriage is releasable, thereby offering the possibility for the structure to remain in place while the lamp carriage performs the exposure of the radiation-sensitive material.

4.  A contact exposure device according to any of claims 1 to 3, wherein the walls of the cells of the structure (17) are radiation-absorbant over their full length.

5.  A contact exposure device according to any of claims 1 to 3, wherein the end of the walls of the cells of the structure (17) facing the lamps is diffusely reflective for the radiation of the lamps.

6.  A contact exposure device according to any of claims 1 to 5, wherein the means for holding the film

EP 0 481 131 A1

and the original in contact with the glass plate is formed by a blanket (16) kept in rolled form in a moveable carriage (14) which in the rest position is out of the exposure area of the glass plate and which is arranged for displacement over the glass plate thereby to unroll the blanket over the plate.

7. A contact exposure device according to claim 6, wherein the blanket carriage is arranged for movement in the same direction as the light source.

8. A contact exposure device according to any of claims 1 to 7, wherein the speed of the driving means for the lamp carriage is adjustable.

Fig.1

Fig.3

7

Fig. 2

## European Patent Office

# EUROPEAN SEARCH REPORT

Application Number

## EP 90 20 2790

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 962 405 (EASTMAN KODAK) <br> * Column 2, line 36 - column 3, line 24; column 4, lines 28-30; column 5, lines 3-24; figures 1-4 * <br> – – – – – | 1,2,4,6-8 | G 03 B 27/16 |

TECHNICAL FIELDS SEARCHED (Int. Cl.5)

G 03 B

The present search report has been drawn up for all claims

| Place of search | Date of completion of search | Examiner |
|---|---|---|
| The Hague | 13 June 91 | LANGE J. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

 

& : member of the same patent family, corresponding document